# EUROPEAN PATENT APPLICATION

(11) **EP 1 489 522 A2**
(43) Date of publication of application: **22.12.2004**
(21) Application number: 04102691.5
(22) Date of filing: 14.06.2004
(51) Int. Cl.: G06F 17/24, G06F 17/22, G06F 17/30

(54) **Processing collateral content associated with an electronic message**

(30) Priority: 16.06.2003 US 463487
(71) Applicant: MICROSOFT CORPORATION, Redmond, WA 98052 (US)
(72) Inventor: Leban, Roy, 98052, Redmond, Washington (US); Liles, Jane R., 98119, Seattle, Washington (US); Gur-esh, Ethan D., Seattle, Washington 98121 (US); Fischer, Carl A., 98008, Bellevue, Washington (US); Young, Kenneth L., 98074, Sammamish, Washington (US); Matlock, Stephen, 98045, North Bend, Washington (US); Harris, Jensen, 98033, Kirkland, Washington (US)
(74) Representative: Zimmer, Franz-Josef, Dr.

(57) **Abstract**

Collateral content editor functionality may be provided to an electronic message application such that an electronic message interface includes an integrated collateral content editor interface for creating formatted and editable collateral content in-line within the body of an electronic message. The collateral content may be converted into a standard-format file that describes the formatting and defines the editable data elements (e.g., an HTML file with embedded XML data). In response to a send message command, the standard-format file may be delivered as an attachment to the electronic message. At the receiving end, it may be determined whether the electronic message application can invoke collateral content editor functionality compatible with the native file format. If so, the compatible collateral content editor functionality is invoked to convert the attachment into the native file format and to display the formatted and editable data elements inline within the body of the electronic message.

## Description

### TECHNICAL FIELD

The present invention relates to collateral content associated with electronic messages. More particularly, the present invention relates to systems and methods for creating, delivering and processing collateral content associated with electronic messages.

### BACKGROUND

As used herein, the term "collateral content" means any object, component, file or other data structure that is related to or associated with the content or purpose of an electronic message. Electronic messages include email messages, instant messages, newsgroup postings, chat room postings and the like. By way of example, an email message may be generated for the purpose of scheduling a meeting. Collateral content associated with the exemplary email message may include a meeting agenda document, a presentation to be presented at the meeting, or any other files or objects related to the meeting.

In accordance with prior art electronic messaging, collateral content is created using application programs that are external to the electronic message application. Collateral content is then associated with an electronic message as either an attachment or as an embedded object. An attachment to an electronic message is intended to be displayed separately from the electronic message. The attachment may itself be an executable file or may be a file that is intended for execution by an external application program. Opening of attachments therefore requires the execution of an additional application program, which can add time and effort to the recipient's electronic messaging experience.

Collateral content that is delivered as an embedded object within an electronic message is intended to be displayed by the recipient's electronic message application in-line within the body of the electronic message. Thus, the recipient is able to view the body of the electronic message and the collateral content without having to execute an external application program. However, in-line display of collateral content requires that the recipient's electronic message application be compatible with the file format of the collateral content, or interface with an external application to achieve such compatibility. For example, if the collateral content is delivered as an embedded "JPEG" image, the recipient's electronic message application must itself be able to render JPEG images or must interface with an external JPEG viewer in order to display the collateral content in-line. Compatibility problems often arise with embedded collateral content that is intended to be editable in-line and is thus stored in a non-standard or proprietary file format. In many cases, if the recipient electronic message application is not compatible with the file format of embedded collateral content, the collateral content cannot be displayed at all.

Sending collateral content as an embedded object within an electronic message can thus provide convenience to certain recipients by eliminating the time and effort that would have been required to open an attachment. However, the prior art methods for embedding collateral content within an electronic message do not provide similar convenience to the sender. For example, a sender typically utilizes an external application program to create, display and edit collateral content and then "copies" and "pastes" the collateral content into the body of an electronic message. Once embedded into an out-going electronic message, the sender has little or no ability to edit the collateral content. Also, if the recipient's electronic message application cannot display the embedded collateral content, the recipient will not be able to view the collateral content unless the sender re-sends the collateral content as an attachment in a format compatible with one of the recipient's external application programs.

Accordingly there is a need for an electronic message application having functionality for creating, displaying and editing collateral content in-line within the body of an out-going electronic message. Such functionality would eliminate the inconvenience to the sender of having to utilize an external application program to create, display and edit collateral content. There further remains a need for ensuring that embedded collateral content can be viewed by all recipients, even if certain recipients' electronic message applications are not compatible with the file format of the embedded collateral content.

### SUMMARY

The present invention meets the above-described and other needs by providing systems and methods for processing collateral content associated with an electronic message. In accordance with certain aspects of the invention, collateral content editor functionality may be provided to an electronic message application such that an electronic message interface includes an integrated collateral content editor interface for creating, displaying and editing the collateral content in-line within the body of the electronic message. The collateral content editor functionality may comprise a component of the electronic message application or may comprise an external program module that is configured to interface with said electronic message application. Collateral content may have a formatting and may comprise editable data elements. The integrated collateral content editor interface may comprise suitable user interface controls for inputting and editing the data elements.

After or during creation of the electronic message and the collateral content, the collateral content may be converted into a standard-format file that describes the formatting of the collateral content and defines the editable data elements of the collateral content. For example, the standard-format file may be an HTML file that includes HTML tags to describe the formatting of the collateral content and embedded XML tags to define the editable data elements of the collateral content. The collateral content may also be saved to memory as a collateral content file, if desired. In response to a send message command input by the sender, the standard-format file may be attached to the electronic message for delivery to at least one recipient. The outgoing electronic message may be, for example, a MIME-compliant email message.

In accordance with other aspects of the invention, an electronic message application may be configured for receiving an electronic message including an attachment that comprises collateral content converted from a native file format into a standard-format. Again, the standard-format may be an HTML file that includes HTML tags to describe the formatting of the collateral content and embedded XML tags to define said data elements of the collateral content. The electronic message may include information identifying the native file format of the collateral content. Based on the information identifying the native file format, it may be determined whether the electronic message application can invoke collateral content editor functionality compatible with the native file format. If so, the collateral content editor functionality is invoked to convert the attachment into the native file format and to display the formatting and editable data elements inline within the body of the electronic message in response to an open message command. In addition, any attachment icon that might have been displayed to indicate the existence of the attachment may optionally be suppressed. If the electronic message application cannot invoke compatible collateral content editor functionality, standard-format viewer functionality is invoked for displaying the standard-format file in response to an open attachment command. These and other aspects, features and embodiments of the present invention will be described in greater detail in the following description of certain exemplary embodiments and the appended figures and claims.

### BRIEF DESCRIPTION OF THE DRAWINGS

Fig. 1 is a block diagram illustrating a representative operating environment for implementation of certain exemplary embodiments of the present invention.
Fig. 2, comprising Fig. 2a and Fig. 2b, is an illustration of an exemplary electronic message interface, including an integrated collateral content editor interface, of an electronic message application in accordance with certain exemplary embodiments of the present invention.
Fig. 3 is a process flow diagram illustrating an exemplary method for creating and preparing collateral content for delivery in association with an electronic message, in accordance with certain exemplary embodiments of the invention.
Fig. 4 is a process flow diagram illustrating an exemplary process for receiving, processing and displaying collateral content associated with an electronic message, in accordance with certain exemplary embodiments of the present invention.

### DETAILED DESCRIPTION

The present invention provides systems and methods for processing collateral content associated with electronic messages. Certain aspects of the present invention provide electronic message applications with collateral content editor functionality for creating, displaying and editing collateral content in-line within the body of an electronic message. The collateral content may be created in a file format native to the collateral content editor functionality. The native file format of the collateral content may be non-standard and/or proprietary to a particular software vendor.

Compatibility concerns with respect to the format of embedded collateral content and recipients' electronic message applications are addressed by certain other aspects of the present invention. According to such certain other aspects of the invention, the collateral content may be converted into a file having a standard format (referred to herein as a "standard-format file"). In certain exemplary embodiments, the standard-format file may be an HTML file comprising HTML tags to describe the formatting of the collateral content and embedded XML tags to define the data elements of the collateral content. Those skilled in the art will recognize that the standard-format file may have any existing or later developed file format that becomes widely adopted among software manufacturers and consumers.

The standard-format file may be delivered as an attachment to the electronic message, rather than as an embedded object. If the recipient's electronic message application includes compatible editor functionality, the collateral content may be converted back to its native file format and treated as an embedded object (i.e., displayed as formatted and editable data in-line within the body of the electronic message.) If the recipient electronic message application does not include compatible editor functionality, the collateral content is treated as an ordinary standard-format file attachment that can be viewed as a static (i.e., non-editable) image using any suitable viewer compatible with the standard-format file (referred to herein as a "standard-format viewer" or "standard-format viewer functionality"). In certain embodiments, the electronic message application may include or have access to standard-format viewer functionality for displaying the standard-format file in-line within the body of the message.

Exemplary embodiments of the present invention will be generally described herein in the context of software modules executed by a personal computer. However, those skilled in the art will recognize that the present invention can also be implemented in conjunction with other types of computer system configurations, including laptop computers, hand-held devices, multiprocessor systems, microprocessor-based or programmable consumer electronics, network terminals, minicomputers, mainframe computers, and the like. Furthermore, those skilled in the art will recognize that the present invention may be implemented in a stand-alone or in a distributed computing environment. In a distributed computing environment, program modules may be physically stored within and executed at different local and/or remote devices. Examples of such distributed computing environments include local area networks, enterprise networks, wide area networks, the global Internet, etc.

In the following description and the accompanying figures, certain embodiments of the present invention are described largely in terms of processes and symbolic representations of operations performed or managed by conventional computer components, including one or more processing units, memory storage devices, and/or input/output devices. The processes and operations performed or managed by the computer components include the manipulation of signals by a processing unit and the maintenance of these signals within data structures resident in one or more local or remote memory storage devices. Such data structures impose a physical organization upon the collection of data stored within a memory storage device and represent specific electrical or magnetic elements. The symbolic representations used herein are intended to be consistent with those used by skilled computer software developers to most effectively convey teachings and discoveries to others skilled in the art.

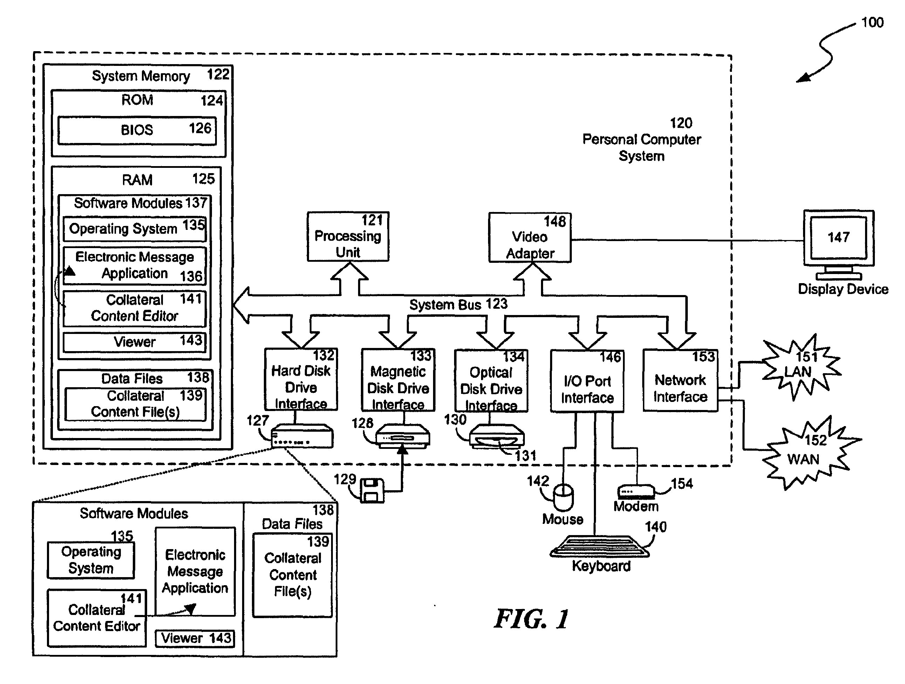

Referring now to the drawings, in which like numerals represent like elements throughout the several figures, aspects of the present invention and an exemplary operating environment for the implementation thereof will be described. Fig. 1 illustrates a representative operating environment 100 for implementation of exemplary embodiments of the present invention. The exemplary operating environment 100 includes a general-purpose computing device in the form of a conventional personal computer 120. Generally, the personal computer 120 includes a processing unit 121, a system memory 122, and a system bus 123 that couples various system components including the system memory 122 to the processing unit 121. The system bus 123 may be any of several types of bus structures, including a memory bus or memory controller, a peripheral bus, or a local bus, using any of a variety of bus architectures. The system memory 122 includes a read-only memory (ROM) 124 and a random access memory (RAM) 125. A basic input/output system (BIOS) 126, containing the basic routines that help to transfer information between elements within the personal computer 120, such as during start-up, is stored in the ROM 124.

The personal computer 120 further includes a hard disk drive 127 for reading from and writing to a hard disk (not shown), a magnetic disk drive 128 for reading from or writing to a removable magnetic disk 129 such as a floppy disk, and an optical disk drive 130 for reading from or writing to a removable optical disk 131 such as a CD-ROM or other optical media. The hard disk drive 127, magnetic disk drive 128, and optical disk drive 130 are connected to the system bus 123 by a hard disk drive interface 132, a magnetic disk drive interface 133, and an optical disk drive interface 134, respectively. Although the exemplary personal computer 120 includes a ROM 124, a RAM 125, a hard disk drive 127, a removable magnetic disk 129, and a removable optical disk 131, it should be appreciated by those skilled in the art that other types of computer readable media which can store data that is accessible by a computer may also be used in the exemplary operating environment 100, such as magnetic cassettes, flash memory cards, digital video disks, Bernoulli cartridges, and the like. The drives and their associated computer readable media can provide nonvolatile storage of computer-executable instructions, data structures, program modules, and other data for the personal computer 120.

A number of software modules 137 may be stored in or on the ROM 124, RAM 125, hard disk drive 127, magnetic disk 129, optical disk 131 or other computer-readable media. Software modules include routines, sub-routines, programs, objects, components, data structures, etc., which perform particular tasks or implement particular abstract data types. Exemplary software modules may include an operating system 135, an electronic message application 136, and a viewer 143 (e.g. and HTML-compatible viewer or other standard-format viewer). The electronic message application 126 may be an email client (also known as a user agent), an instant messaging application, a news application, a chat room application, etc. Electronic message applications 126 include functionality for generating, sending, receiving and displaying electronic messages. Data files 138, including collateral content files 139 may also be stored in or on the 124, RAM 125 and other computer-readable media of the personal computer 120. Collateral content files 139 may include any object, component, module or other data structure that is related to or associated with the content or purpose of an electronic message.

Input devices, such as a keyboard 140 and a pointing device 142, may be used to enter commands and information to the personal computer 120. The pointing device 142 may by a mouse, a trackball, or an electronic pen that can be used in conjunction with an electronic tablet. Other input devices (not shown) may include a microphone, joystick, game pad, satellite dish, scanner, or the like. These and other input devices are often connected to the processing unit 122 through an input/output ("I/O") interface 146 that is coupled to the system bus 123. The I/O interface 146 may be a serial port, a parallel port, a game port, a universal serial bus (USB), or the like. A display device 147, such as a monitor, may also be connected to system bus 123 via the I/O interface or via a dedicated video adapter 148. In addition to the display device 147, the personal computer 120 may include other output devices (not shown), such as speakers, a printer, a projector, etc.

The personal computer 120 may operate in a networked environment using logical connections to one or more remote computers. Remote computers may be personal computers, servers, clients, routers, network PCs, peer devices, or other common network nodes. A remote computer may include many or all of the elements described above relative to the personal computer 120. The logical connections depicted in Fig. 1 include a local area network (LAN) 151 and a wide area network (WAN) 152. The personal computer 120 may be connected to the LAN 151 and/or WAN 152 through a network interface or adapter 153. In other embodiments, the personal computer 120 may include a modem 154 or other means for establishing communications over a network. Modem 154, which may be internal or external, is connected to system bus 123 via I/O port interface 146. It will be appreciated that the network connections shown are exemplary and other means of establishing a communications link between the computers may be used.

As mentioned, certain aspects of the invention involve providing collateral content editor functionality to an electronic message application 138 for creating, displaying and editing collateral content in-line within the body of an electronic message. Such collateral content editor functionality, sometimes referred to herein for brevity as a collateral content editor 141, can be built into the electronic message application 136, or provided as an add-on software module. A collateral content editor 141 may be compatible with one or more types of collateral content in one or more native file formats. Multiple collateral content editors 141 may be incorporated into, or provided as add-on software modules for, an electronic message application 136. The phrase "add-on software module" is intended to mean an external software module that interfaces with the electronic message application 136. Examples of collateral content editors 141 and their associated collateral content types include, but are not limited to: agenda editors for creating, editing and displaying agendas; image editors for creating, editing and displaying images; diagram editors for creating, editing and displaying diagrams (e.g., flow-charts, floor plans, organization charts, etc.) check-list editors for creating, editing and displaying check-lists; map editors for creating, editing and displaying maps; card editors for creating, editing and displaying cards (e.g., business cards, greeting cards, trading cards, etc.); multimedia editors for creating, editing and displaying multimedia objects; etc.)

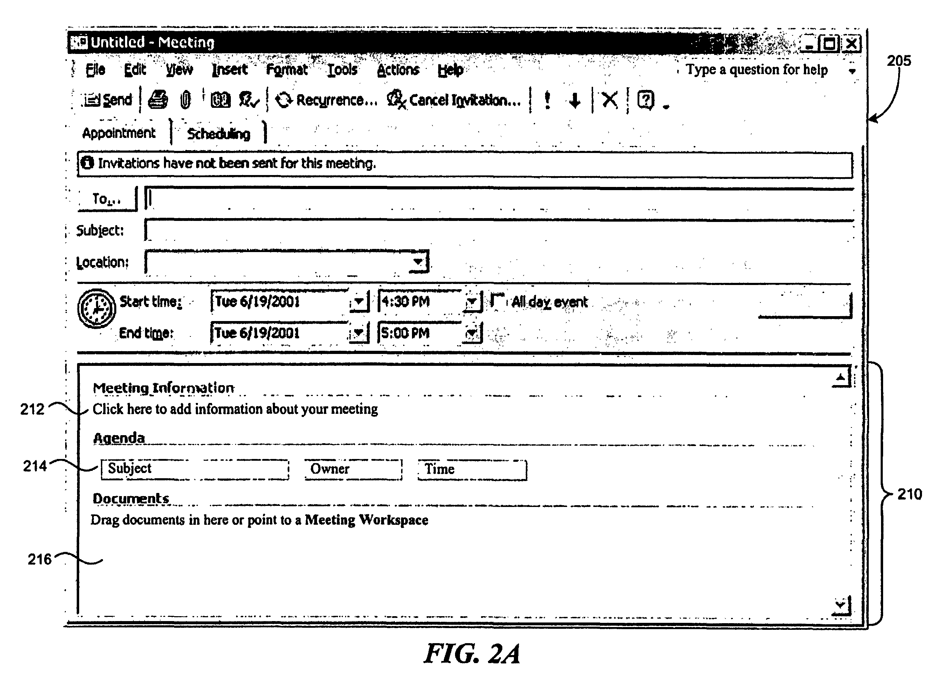

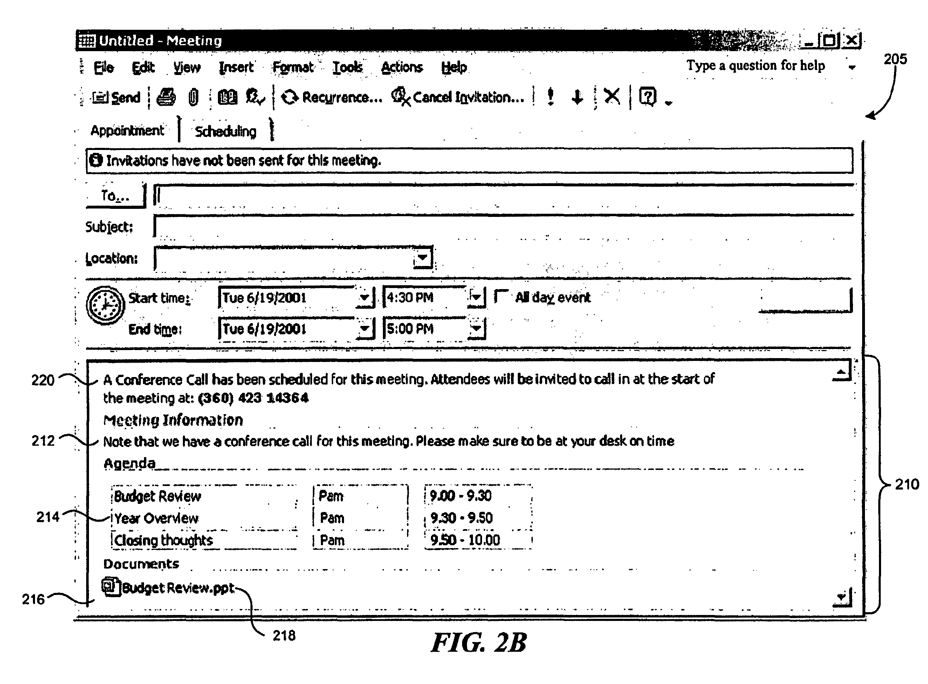

Fig. 2, comprising Fig. 2a and Fig. 2b, is an illustration of an exemplary email interface 205 of an electronic message application 136 (an email client) in accordance with certain embodiments of the invention. As shown in Fig. 2a, the exemplary email interface 205 includes an integrated collateral content editor interface 210. In the example shown, the email interface is designed to generate an email for scheduling a meeting and the integrated collateral content editor 141 is an agenda editor for creating, editing and displaying an agenda for the meeting. The exemplary collateral content editor interface 210 includes: a "Meeting Information" text area 212 for input of a description of the meeting; an "Agenda" text area 214 for input of agenda items; and a "Documents" area 216 for attaching additional documents or files. The above-described and/or any other suitable user interface controls may be included in the exemplary collateral content editor interface 210. Fig. 2b shows the email interface 205 including an exemplary user input email message 220 and collateral content. As shown, the exemplary collateral content includes meeting information specified in the "Meeting Information" text area 212, agenda items specified in the "Agenda" text area 214 and a "Budget Review.ppt" file 218 added to the "Documents" area 216.

The functionality of the exemplary collateral content editor 141 will be apparent to those of skill in the art based upon the depicted collateral content editor interface 210. Those skilled in the art will further appreciate that such collateral content editor functionality can be implemented using a variety of software programming techniques. Accordingly, no particular software coding technique is described herein and the present invention is not intended to be limited to any particular software coding technique. Those skilled in the art will appreciate that additional and/or alternative collateral content editor functionality may be provided. The present invention is not intended to be limited to any particular collateral content editor functionality.

The information that is input by the user via the collateral content editor interface 210 may be stored in one or more collateral content files 139. The collateral content files 139 may have a file format that is native to the collateral content editor 141. In other words, the file format of the collateral content may be non-standard and/or proprietary and thus readable by only compatible collateral content editors 141. Using the integrated collateral content editor interface 210 of the collateral content editor 141, the sender of an email is able to create and edit collateral content from within the body of an out-going email message.

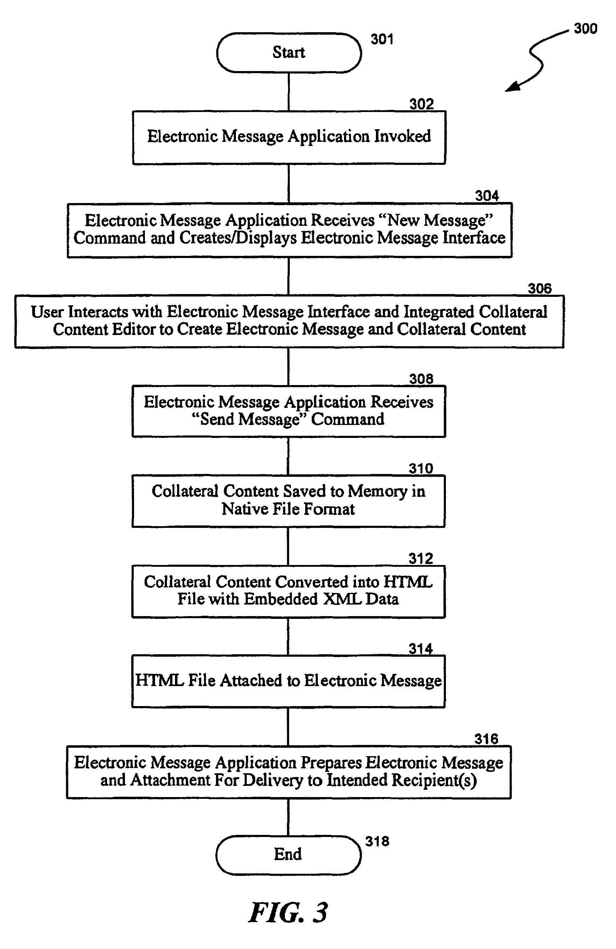

Fig. 3 illustrates an exemplary method for creating and preparing collateral content for delivery in association with an electronic message, in accordance with certain embodiments of the invention. The exemplary method 300 begins at starting block 301 and proceeds to step 302, where the electronic message application 136 is invoked. In certain exemplary embodiments, the electronic message application 136 is an email client and the electronic message is an email message. Next at step 304, the electronic message application 136 receives a command from the user indicating that a new email is to be created. In response to the "create new message" command, the electronic message application creates and displays an electronic message interface 205 (e.g., a blank email message). At step 306, the user interacts with the electronic message interface 205 and its integrated collateral content editor interface 210 to create the electronic message and the collateral content.

Next at step 308, the electronic message application receives a "send command input by the sender, indicating that the electronic message is to be delivered to the intended recipient(s). In response to the send message command, the electronic message application may save a copy of the collateral content, in its native file format, to memory at step 310. The collateral content file 139 may be saved to a temporary or permanent memory storage location of the sender's computer system 100. Saving a collateral content file 139 to a permanent memory provides the opportunity to re-use the collateral content at a later time. For example, the collateral content file 139 may be imported from memory into an electronic message so that the sender does not need to re-create the collateral content in-line using the collateral content editor 141. As another example, the sender (or any other user) may desire to subsequently view and/or edit the collateral content file 139 using an external collateral content editor 141 independent of the electronic message application 136.

Next at step 312, the electronic message application 136 converts the collateral content file 139 (or a copy thereof) into a standard-format file. The standard-format file may be saved to a temporary or permanent memory location if necessary or desired. In certain exemplary embodiments, the standard-format file may be an HTML file. Thus, while the description of exemplary embodiments may hereinafter specifically refer to an HTML file, those skilled in the art will appreciate that invention is not intended to be so limited. The HTML file may include HTML tags to describe the formatting of the collateral content and embedded XML tags to define the data elements of the collateral content. Those skilled in the art will also appreciate that there is not necessarily a need to embed the XML data within the HTML file. In other embodiments, the HTML file could be made to reference a separate XML data file. Furthermore other suitable markup languages may be employed for describing and defining collateral content.

The HTML file is then attached to the electronic message at step 314. Thus in the example of Fig. 2, the electronic message would include two attachment files, the "Budget Review.ppt" file and an "Agenda.html" file representing the converted collateral content. At step 316, the electronic message application 136 completes any remaining delivery preparation of the electronic message. The present invention is intended to be compatible with existing electronic message delivery standards, such as the Multipurpose Internet Mail Extensions ("MIME") standard for encapsulated messages. Accordingly, preparation of the electronic mail message and its HTML file attachment for delivery at step 316 may involve conversion to a MIME-compliant message.

Those skilled in the art will recognize that MIME has become the most widely adopted format for the delivery of email messages. MIME is an extension to the simple email format defined by RFC 822. MIME allows for more complex multipart email messages, while still ensuring that email clients with even the most limited capabilities can process MIME-compliant email messages. MIME defines a standard for structuring attachments, embedded objects, HTML, etc. within the context of the Simple Mail Transport Protocol ("SMTP").

When the electronic message and attachment are ready for delivery to the intended recipient(s), the exemplary method ends at step 318. The electronic message and its attachment may then be delivered to the intended recipient(s) via regular delivery mechanisms.

Those skilled in the art will also appreciate that the processing sequence described above with reference to Fig. 3 was provided by way of example only and that other sequences are possible. For example, the conversion of collateral content into a standard-format file may occur at any time prior to the sender's input of a send message command, including during creation of the collateral content. As another example, the electronic message application may create the electronic message in MIME format, meaning that no MIME conversion need be performed just prior to delivery of the electronic message. These and other variations of the exemplary method 300 for creating and preparing collateral content for delivery in association with an electronic message will be apparent to those of ordinary skill in the art and are encompassed by the present invention.

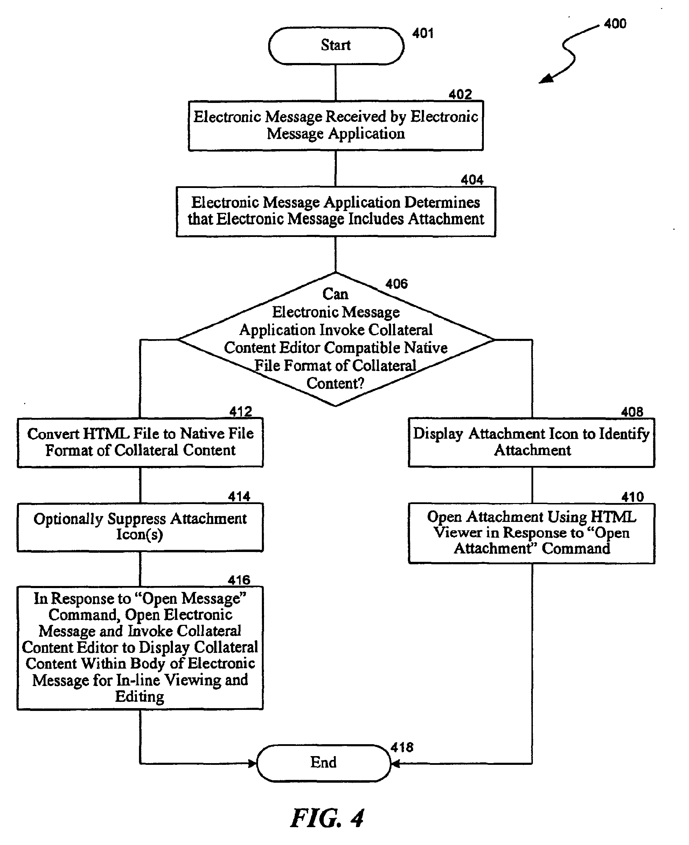

Fig. 4 illustrates an exemplary process for receiving, processing and displaying collateral content associated with an electronic message, in accordance with certain embodiments of the present invention. The exemplary method 400 begins at starting block 401 and proceeds to step 402, where an electronic message application 136 receives an electronic message. Next at step 404, the electronic message 136 determines that the electronic message includes an attachment. As described above, the attachment may be an HTML file with embedded XML data that was created from a collateral content file having file format native to a particular collateral content editor 141. In that case, the electronic message may include information to identify the native file format of the collateral content file. Such identifying information may reside in a header or any other suitable part of an electronic message.

At step 406, a determination is made as to whether the electronic message application 136 can invoke a compatible collateral content editor 141. The electronic message application 136 can invoke a compatible collateral content editor 141 if it includes or has access to such collateral content editor functionality. In certain cases, the electronic message application may be a "legacy" product that is not capable of recognizing that the attachment embodies "special" collateral content intended to be treated as an embedded object. In other cases, the electronic message application may recognize certain types of "special" collateral content, but not the particular native file format of the collateral content embodied in the attachment.

If the electronic message application 136 cannot invoke a compatible collateral content editor 141, the HTML attachment is processed according to the normal operation of the electronic message application 136. For example, the electronic message applications 136 may be configured to display an attachment icon in connection with the electronic message at step 408, so as to alert the recipient of the existence of the attachment. The electronic message application 136 may cause the HTML attachment to be opened at step 410, in response to an "open attachment" command input by the recipient. The electronic message application 136 may include HTML viewer functionality or may interface with an external browser or other HTML-compatible viewer 143.

Returning to step 406, if the electronic message application 136 can invoke a compatible collateral content editor 141, the exemplary method proceeds to step 412, where the HTML attachment is converted back into the native file format of the collateral content. The collateral content editor 141 may perform the conversion, for example. Next, at step 414, the electronic message application 136 may optionally be instructed to suppress any attachment icon that might have been generated to indicate the existence of the HTML attachment. Then at step 416, the electronic message application 138 opens the electronic message in response to an "open message" command input by the recipient and invokes the collateral content editor 141 to display the collateral content, in its native file format, in-line within the body of the electronic message. The embedded collateral content is formatted and fully editable using the collateral content editor 141.

After the collateral content is displayed, either as an HTML attachment file at step 408 or as an embedded, fully-editable object at step 416, the exemplary method 400 ends at step 418. Accordingly, the exemplary method 400 describes a process for collateral content embedded within an outgoing electronic message can be displayed by a recipient, even if the recipient's electronic message application does not include compatible collateral content editor functionality. The recipient's electronic message application may be configured, according to exemplary method 400 and alternate embodiments thereof, to display collateral content as rich, fully editable, in-line content when possible, and to provide the collateral content as an attachment having a standard, non-proprietary file format when in-line display is not possible.

Based on the foregoing, it may be seen that certain aspects of the present invention provide systems and methods for creating, displaying and editing collateral content in-line within the body of an electronic message. Other aspects of the present invention further provide systems and methods for ensuring that embedded collateral content can be viewed by all recipients, even if certain recipients' electronic message applications are not compatible with the native file format of the embedded collateral content. Certain embodiments of the present invention include computer-readable media storing computer-executable instructions for performing the various functions, processes and methods described herein and illustrated in the appended figures. However, it should be apparent that there could be many different ways of implementing the invention in computer programming, and the invention should not be construed as limited to any one set of computer-executable instructions. Further, a skilled programmer would have no difficult in constructing computer-executable instructions suitable to implement the disclosed invention, making unnecessary the disclosure herein of any particular set of such computer-executable instructions.

Many other modifications, features, embodiments and operating environments of the present invention will become evident to those of skill in the art. It should also be appreciated that many aspects of the present invention were described above by way of example only and are, therefore, not intended as required or essential elements of the invention. It should be understood, therefore, that the foregoing relates only to certain embodiments of the invention, and that numerous changes may be made therein without departing from the spirit and scope of the invention as defined by the following claims.

## Claims

1. A method in a computer system for processing collateral content associated with electronic messages, the method comprising:
receiving an electronic message having a body, collateral content, and an indication of a native format, the collateral content being in a standard format;
determining whether editor functionality for the native format is available;
when it is determined that editor functionality for the native format is available,
converting the collateral content of the received electronic message to the native format; and
invoking the editor functionality to control the editing of the editable data elements of the converted collateral content in the native format, the editing being performed inline within the body of the electronic message; and
when it is determined that the editor functionality for the native format is not available, invoking standard viewer functionality to display the collateral content in the standard format.

2. The method of claim 1 wherein the editor functionality is invoked to convert the collateral content.

3. The method of claim 1 wherein the invoking is performed in response to request to open the collateral content.

4. The method of claim 1 wherein the collateral content is an attachment to the electronic message.

5. The method of claim 1 wherein the electronic message is an email message.

6. The method of claim 1 wherein the standard format is a markup language format.

7. The method of claim 1 wherein the standard format is an HTML format with XML tags identifying the editable elements.

8. A computer system for processing collateral content associated with electronic messages, comprising:
a component that receives electronic messages having a body, collateral content, and an indication of a native format, the collateral content being in a standard format; and
a component that when editor functionality for the native format is available, converts the collateral content of the received electronic message to the native format and invokes the editor functionality to control the editing of the editable data elements, the editor functionality using the converted collateral content.

9. The computer system of claim 8 wherein the editing is performed inline within the body of the electronic message.

10. The computer system of claim 8 including a component that when the editor functionality for the native format is not available, invokes standard viewer functionality to display the collateral content in the standard format.

11. The computer system of claim 8 wherein the editor functionality is invoked to convert the collateral content.

12. The computer system of claim 8 wherein the collateral content is an attachment to the electronic message.

13. The computer system of claim 8 wherein the electronic message is an email message.

14. The computer system of claim 8 wherein the standard format is a markup language format.

15. The computer system of claim 8 wherein the standard format is an HTML format with XML tags identifying the editable elements.

16. A computer-implemented method for processing collateral content associated with an electronic message, the collateral content having a formatting and comprising editable data elements, the method comprising:
receiving the electronic message at an electronic message application, wherein the electronic message includes a body and an attachment, said attachment comprising said collateral content converted from a native file format into an standard-format file that describes the formatting of the collateral content and defines the editable data elements of the collateral content, said electronic message including information identifying the native file format of the collateral content;
based on the information identifying the native file format, determining whether the electronic message application can invoke collateral content editor functionality compatible with the native file format;
if the electronic message application can invoke said collateral content editor functionality, invoking the collateral content editor functionality to convert the attachment into the native file format and to display the formatting and editable data elements inline within the body of the electronic message in response to an open message command; and
if the electronic message application cannot invoke said collateral content editor functionality, invoking standard-format viewer functionality for displaying the standard format file in response to an open attachment command.

17. The method of claim 16, wherein the electronic message comprises a MIME-compliant email message.

18. The method of claim 16, wherein said electronic message application can invoke said collateral content editor functionality; and
wherein the collateral content editor functionality comprises a component of said electronic message application.

19. The method of claim 16, wherein said electronic message application can invoke said collateral content editor functionality; and
where in the collateral content editor functionary comprises an external program module that is configured to interface with said electronic message application.

20. The method of claim 16, wherein the standard-format file comprises an HTML file comprising HTML tags to describe said formatting and embedded XML tags to define said editable data elements.

21. The method of claim 20, wherein converting the attachment comprises interpreting the HTML tags and the embedded XML tags to recreate the formatting and editable data elements of the collateral content in the native file format.

22. The method of claim 16, further comprising the step of if the electronic message application can invoke said collateral content editor functionality, suppressing any attachment icon that might have been displayed to indicate the existence of the attachment.

23. A computer-readable medium having stored thereon computer-executable instructions for performing the method of claim 16.

24. A computer-implemented method for processing collateral content associated with an electronic message, the method comprising:
providing collateral content editor functionality to an electronic message application such that an electronic message interface includes an integrated collateral content editor interface for creating, displaying and editing the collateral content in-line within the body of the electronic message, the collateral content having a formatting and comprising editable data elements;
converting the collateral content into a standard-format file that describes the formatting of the collateral content and defines the editable data elements of the collateral content; and
preparing the standard-format file for delivery as an attachment to the electronic message.

25. The method of claim 24, further comprising the step of formatting the electronic message and the attachment as a MIME-compliant email message.

26. The method of claim 24, wherein the collateral content editor functionality comprises a component of said electronic message application.

27. The method of claim 24, wherein the collateral content editor functionality comprises an external program module that is configured to interface with said electronic message application.

28. The method of claim 24, wherein the integrated collateral content editor interface comprises user interface controls for inputting and editing the data elements.

29. The method of claim 24, wherein the standard-format file comprises an file comprising HTML tags to describe said formatting and embedded XML tags to define said editable data elements.

30. The method of claim 24, wherein converting the collateral content into the standard-format file comprises:
saving the collateral content to memory as a collateral content file; and
converting a copy of the collateral content file into the standard-format file.

31. A computer-readable medium having stored thereon computer-executable instructions for performing the method of claim 24.

32. A system for processing collateral content associated with an electronic message configured for execution of computer-executable instructions for performing the steps comprising:
in response to a create new message command, displaying an electronic message interface for creating an outgoing electronic message and invoking collateral content editor functionality such that the electronic message interface includes an integrated collateral content editor interface for creating, displaying and editing the collateral content in-line within a body of the outgoing electronic message, the collateral content having a formatting and comprising editable data elements;
converting the collateral content into a standard-format file that describes the formatting of the collateral content and defines the editable data elements of the collateral content, and attaching the standard-format file to the outgoing electronic message for delivery to at least one recipient; and
in response to an open message command, determining that a received electronic message includes an attachment that has been converted from a native file format compatible with the collateral content editor functionality, and invoking the collateral content editor functionality to convert the attachment into the native file format and to display the collateral content within the body of the electronic message.

33. The system of claim 32, wherein the outgoing electronic message and the received electronic message each comprise MIME-compliant email message.

34. The system of claim 32, wherein the collateral content editor functionality comprises a component of an electronic message application.

35. The system of claim 32, wherein the collateral content editor functionality comprises an external program module that is configured to interface with an electronic message application.

36. The system of claim 32, wherein the standard-format file comprises an HTML file comprising HTML tags to describe said formatting and embedded XML tags to define said editable data elements.

37. The system of claim 36, wherein converting the attachment comprises interpreting the HTML tags and the embedded XML tags to recreate the formatting and editable data elements of the collateral content in the native file format.

38. The system of claim 32, further configured for executing computer-executable instructions for performing the step comprising:
in response to determining that the received electronic message includes the attachment that has been converted from the native file format compatible with the collateral content editor functionality, suppressing any attachment icon that might have been displayed to indicate the existence of the attachment.

39. The system of claim 32, wherein the integrated collateral content editor interface comprises user interface controls for inputting and editing the data elements.

40. The system of claim 32, wherein converting the collateral content into the standard-format file comprises:
saving the collateral content to memory as a collateral content file ; and
converting a copy of the collateral content file into the standard-format file.
